# FASCICULE DE BREVET EUROPEEN

(11) **EP 3 096 964 B1**
(45) Date de publication et mention de la délivrance du brevet: **02.05.2018**
(21) Numéro de dépôt: 14827812.0
(22) Date de dépôt: 09.12.2014
(51) Int. Cl.: B60G 7/02, B62D 21/15

(54) **CHAPE DE LIAISON FUSIBLE ENTRE LE BRAS DE SUSPENSION ET LE BERCEAU MOTEUR**
DEFORMIERBARE KLAMMER ZWISCHEN DEM QUERLENKER UND DEM VORDERRADTRÄGER
FUSIBLE LINKING BRACKET BETWEEN THE SUSPENSION ARM AND THE ENGINE CRADLE

(30) Priorité: 20.01.2014 FR 1450413
(43) Date de publication de la demande: 30.11.2016
(73) Titulaire: Renault S.A.S., 92100 Boulogne-Billancourt (FR)
(72) Inventeur: SAUDEMONT, Yoann, F-28210 Les Pinthieres (FR)
(86) Numéro de dépôt international: PCT/FR2014/053244
(87) Numéro de publication internationale: WO 2015/107274

(56) Documents cités:
- DE-A1-102008 000 936
- US-A- 5 443 281
- US-A- 5 775 719

## Description

### Domaine technique de l'invention

L'invention concerne le domaine de la fixation d'un bras de suspension sur un berceau moteur d'un véhicule automobile.

L'invention a pour objet plus particulièrement un agencement pour véhicule automobile, comprenant un bras de suspension, un berceau moteur, une roue fixée au bras de suspension par l'intermédiaire d'un porte-fusée et une chape intermédiaire de liaison disposée entre le bras de suspension et le berceau moteur pour assurer tout ou partie de la fixation du bras de suspension sur le berceau moteur. Elle concerne aussi un véhicule automobile comprenant au moins un tel agencement.

### État de la technique

Dans la conception d'un véhicule automobile, la gestion des chocs subis par les roues est problématique. Il convient d'encaisser les chocs autant que possible pour éviter une insécurité des passagers en même temps qu'une détérioration du véhicule, en particulier au niveau de la caisse structurelle et des bras de suspension. Il s'agit de la gestion de la composante latérale des efforts extérieurs orientée suivant la direction latérale du véhicule correspondant à la largeur du véhicule et dans le même temps de la gestion de la composante longitudinale des efforts extérieurs orientée suivant la direction longitudinale du véhicule correspondant à la longueur du véhicule.

Le document DE 102008000936A1 montre une fixation de bras comprenant un système d'absorption d'énergie.

Il existe actuellement des difficultés à obtenir un bon compromis entre la tenue des bras de suspension en choc longitudinal et une capacité de fusibilité en choc latéral.

Les solutions actuelles offrent un couplage du comportement en choc longitudinal et en choc latéral qui ne permet pas de répondre correctement aux exigences de tenue mécanique face aux chocs appliqués à la roue. Une technique consiste à ménager des moyens fusibles solidaires du bras de suspension. En cas de choc, le bras de suspension est à remplacer, ce qui est particulièrement onéreux et peu pratique.

En outre, il apparaît souvent un phénomène de décapsulage de la rotule entre le bras de suspension et le porte-fusée suite à la ruine du bras en cas de choc encaissé par la roue, ce qui provoque une perte de contrôle du véhicule.

### Objet de l'invention

Le but de la présente invention est de proposer un agencement pour véhicule automobile qui remédie aux inconvénients listés ci-dessus.

Notamment, un objet de l'invention est de fournir un agencement qui permette :
- de fournir une fusibilité latérale découplée d'une fusibilité longitudinale,
- de proposer une solution moins onéreuse, avec une pièce fusible distincte du bras de suspension et du berceau moteur,
- d'éviter le phénomène de décapsulage du montage à rotule du bras de suspension sur le porte-fusée en cas de choc subi par la roue.

Cet objet peut être atteint par l'intermédiaire d'un agencement pour véhicule automobile, comprenant un bras de suspension, un berceau moteur, une roue fixée au bras de suspension et au moins une chape intermédiaire de liaison disposée entre le bras de suspension et le berceau moteur pour assurer tout ou partie de la fixation du bras de suspension sur le berceau moteur, des éléments de fixation démontables de la chape de liaison sur le berceau moteur, des éléments de fixation du bras de suspension à la chape de liaison, des premiers éléments fusibles configurés de sorte à autoriser un premier déplacement relatif du bras de suspension par rapport au berceau moteur sur une première course uniquement en cas d'application, sur la roue et/ou sur le bras de suspension, d'un effort extérieur dont la composante latérale comptée suivant une direction latérale du véhicule est supérieure à un premier seuil prédéterminé pour lequel les premiers éléments fusibles sont dimensionnés, les premiers éléments fusibles comprenant au moins une partie de la chape de liaison.

Selon un mode de réalisation, les premiers éléments fusibles sont configurés de sorte à interdire le premier déplacement relatif sur la première course si la composante latérale dudit effort extérieur est inférieure au premier seuil prédéterminé et quelle que soit la valeur de la composante longitudinale dudit effort extérieur comptée suivant une direction longitudinale du véhicule.

La chape de liaison peut être configurée et implantée par rapport au berceau moteur et au bras de suspension d'une manière telle que le premier déplacement relatif sur la première course se pratique suivant la direction latérale du véhicule et selon un premier sens dirigé de la roue vers le berceau moteur.

Selon un autre mode de réalisation, les éléments de fixation du bras de suspension à la chape de liaison comprennent un organe monté sur le bras de suspension, notamment un boulon, et les premiers éléments fusibles comprennent un premier élément de guidage solidaire de la chape de liaison configuré de sorte à guider un premier déplacement de l'organe par rapport à la chape de liaison selon une trajectoire et le long du premier élément de guidage correspondant à ladite première course et un premier élément de blocage configuré pour se rompre uniquement si la composante latérale de l'effort extérieur est supérieure au premier seuil prédéterminé, le premier déplacement de l'organe n'étant autorisé qu'en cas de rupture du premier élément de blocage.

Les éléments de fixation du bras de suspension à la chape de liaison peuvent comprendre un organe monté sur le bras de suspension, notamment un boulon, et les premiers éléments fusibles peuvent comprendre au moins une aile sur laquelle l'organe est fixé et configurée de sorte à se déformer plastiquement uniquement si la composante latérale de l'effort extérieur est supérieure au premier seuil prédéterminé, la déformation plastique de l'aile qui en résulte s'accompagnant d'un déplacement de l'organe selon une trajectoire par rapport au berceau moteur correspondant à ladite première course.

L'agencement peut comprendre des deuxièmes éléments fusibles indépendants et dissociés des premiers éléments fusibles et configurés de sorte à autoriser un deuxième déplacement relatif du bras de suspension par rapport au berceau moteur sur une deuxième course uniquement en cas d'application, sur la roue et/ou sur le bras de suspension, d'un effort extérieur dont la composante longitudinale comptée suivant la direction longitudinale du véhicule est supérieure à un deuxième seuil prédéterminé pour lequel les deuxièmes éléments fusibles sont dimensionnés, les deuxièmes éléments fusibles comprenant au moins une partie de la chape de liaison.

Les deuxièmes éléments fusibles sont de préférence configurés de sorte à interdire le deuxième déplacement relatif sur la deuxième course si la composante longitudinale de l'effort extérieur est inférieure au deuxième seuil prédéterminé et quelle que soit la valeur de la composante latérale de l'effort extérieur comptée suivant la direction latérale du véhicule.

La chape de liaison peut être configurée et implantée par rapport au berceau moteur et au bras de suspension d'une manière telle que le deuxième déplacement relatif selon la deuxième course se pratique suivant la direction latérale et selon un deuxième sens dirigé du berceau moteur vers la roue.

Les éléments de fixation du bras de suspension à la chape de liaison comprennent un organe monté sur le bras de suspension, notamment un boulon, et les deuxièmes éléments fusibles comprennent un deuxième élément de guidage solidaire de la chape de liaison configuré de sorte à guider un deuxième déplacement de l'organe par rapport à la chape de liaison selon une trajectoire le long du deuxième élément de guidage correspondant à ladite deuxième course et un deuxième élément de blocage configuré pour se rompre uniquement si la composante longitudinale dudit effort extérieur est supérieure au deuxième seuil prédéterminé, le deuxième déplacement de l'organe n'étant autorisé qu'en cas de rupture du deuxième élément de blocage.

Selon un mode de réalisation, les premier et deuxième éléments de guidage comprennent une glissière dans laquelle pénètre au moins une partie dudit organe, les premier et deuxième éléments de blocage étant disposés, avant la rupture d'au moins l'un des premier et deuxième éléments de blocage en raison de l'application de l'effort extérieur, de part et d'autre dudit organe suivant la direction de glissement définie par la glissière.

La fixation du bras de suspension au berceau moteur peut comprendre un système de montage à rotule distinct de la chape de liaison, le point de fixation conféré par la chape de liaison et le point de fixation conféré par ce système de montage à rotule étant décalés entre eux suivant la direction longitudinale du véhicule.

L'agencement peut comprendre une deuxième chape de liaison montée entre le système de montage à rotule et le berceau moteur, de même nature que la chape de liaison en liaison avec les éléments de fixation mais distincte de celle-ci.

Les éléments de fixation assurent de préférence une liaison rotule entre la chape de liaison et le bras de suspension et la chape de liaison est logée entre ladite liaison rotule et le berceau moteur.

Un véhicule automobile pourra comprendre au moins un tel agencement.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue en perspective représentant partiellement un premier mode de réalisation d'agencement selon l'invention,
- la figure 2 est une vue en perspective représentant la chape de liaison de la figure 1,
- la figure 3 est une vue identique à la figure 1 mais illustre la situation après actionnement des premiers éléments fusibles,
- les figures 4 et 5 sont des vues en perspective représentant partiellement un deuxième mode de réalisation d'agencement selon l'invention,
- les figures 6 et 7 représentent un premier exemple du deuxième mode de réalisation, respectivement avant et après actionnement des premiers éléments fusibles,
- les figures 8 et 9 représente un deuxième exemple du deuxième mode de réalisation, respectivement avant et après actionnement des premiers éléments fusibles,
- les figures 10 et 11 représentent un troisième exemple du deuxième mode de réalisation, respectivement avant et après actionnement des premiers éléments fusibles,
- et les figures 12 et 13 représentent un quatrième exemple du deuxième mode de réalisation, respectivement avant et après actionnement des premiers éléments fusibles.

### Description de modes préférentiels de l'invention

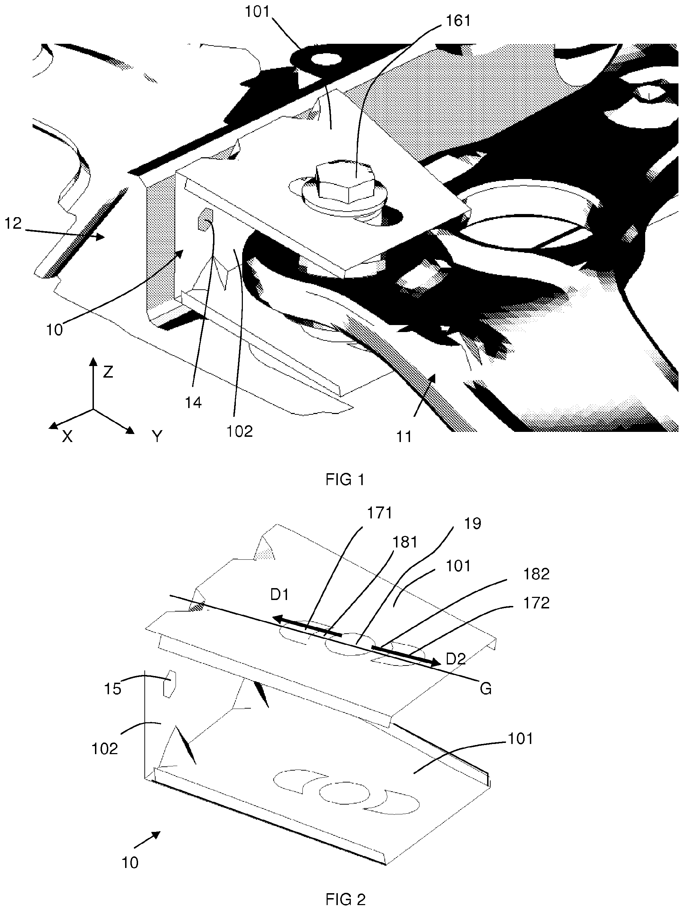

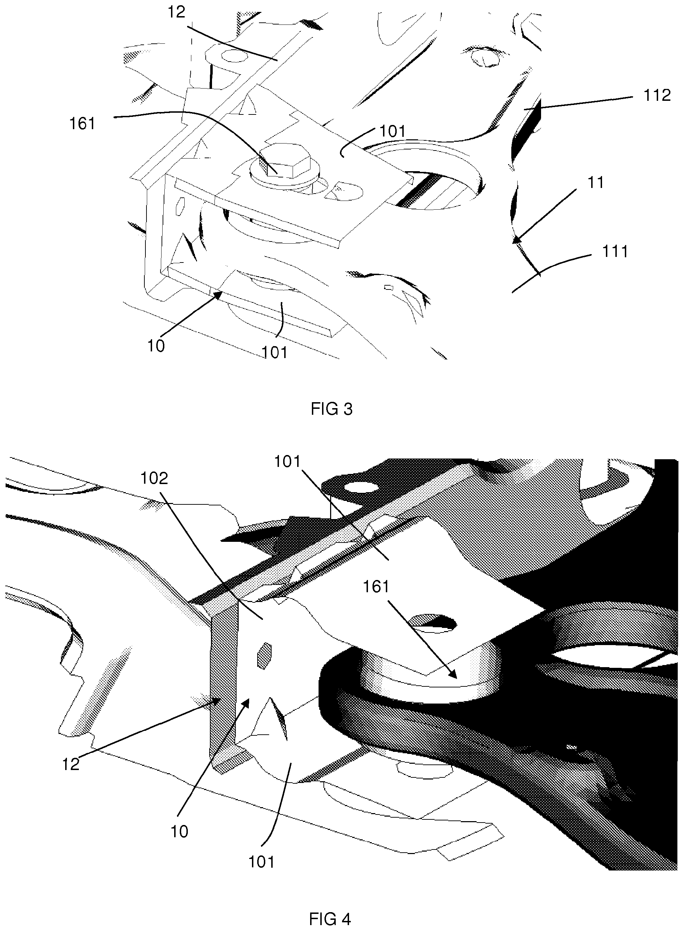

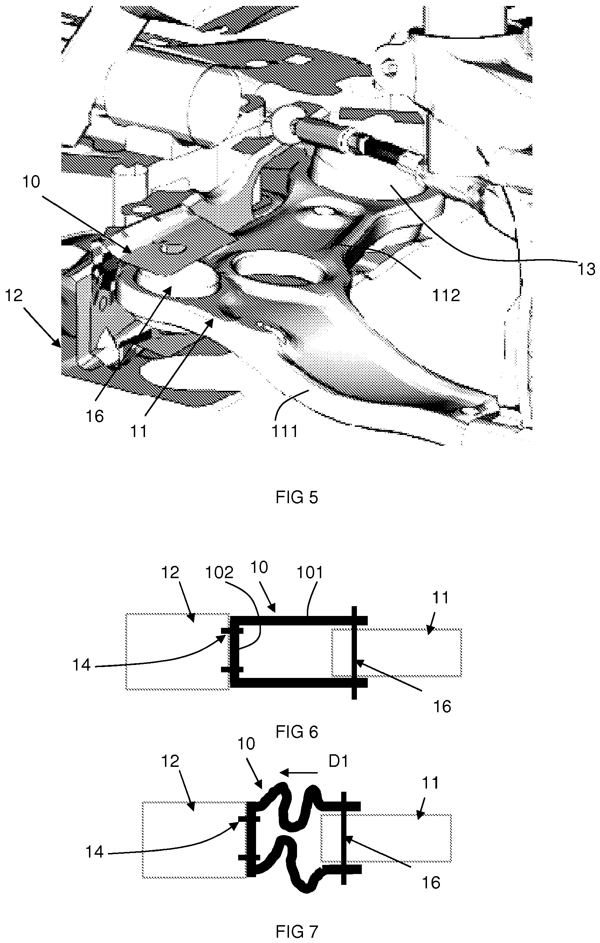

L'invention est maintenant décrite en référence aux figures 1 à 13. Un premier mode de réalisation est représenté sur les figures 1 à 3, tandis qu'un deuxième mode de réalisation est représenté sur les figures 4 à 13. Le deuxième mode de réalisation, dont le principe est visible sur les figures 4 et 5, est en outre détaillé par l'intermédiaire de quatre exemples via les figures 6 à 13. Les mêmes références numérales sont conservées d'un mode à l'autre pour des pièces identiques ou ayant des fonctions de même nature.

Pour une meilleure compréhension, un repère orthonormé est associé à l'agencement pour véhicule automobile, avec :
- une direction longitudinale repérée X qui correspond à la direction le long de laquelle la longueur du véhicule est comptée et correspondant normalement à la direction de déplacement avant-arrière,
- une direction latérale repérée Y qui correspond à la direction le long de laquelle la largeur du véhicule est comptée et qui est normalement horizontale,
- une direction verticale Z conjointement perpendiculaire aux directions longitudinale X et latérale Y, qui correspond à la direction le long de laquelle la hauteur du véhicule est comptée et qui est normalement verticale.

L'agencement pour véhicule automobile comprend un bras de suspension 11, un berceau moteur 12, une roue (non représentée) fixée au bras de suspension 11 par l'intermédiaire d'un porte-fusée visible à droite de la figure 5 et une chape de liaison 10 disposée de manière intermédiaire entre le bras de suspension 11 et le berceau moteur 12. La chape de liaison 10 assure tout ou partie de la fixation du bras de suspension 11 sur le berceau moteur 12. Notamment, elle assure une partie de la fixation complète dans le cas où la fixation du bras de suspension 11 au berceau moteur 12 comprend en complément de la chape 10 un système de montage à rotule 13 distinct de la chape de liaison 10, le point de fixation conféré par la chape de liaison 10 et le point de fixation conféré par ce système de montage à rotule 13 étant décalés entre eux suivant la direction longitudinale X du véhicule. Il s'agit notamment d'un bras de suspension 11 dit inférieur.

Plus précisément, le bras de suspension 11 comprend une première branche 111 ayant une première extrémité latérale distale, c'est-à-dire opposée au berceau moteur 12 suivant la direction latérale Y, et une deuxième extrémité latérale proximale tournée du côté du berceau moteur 12. Il comprend aussi une deuxième branche 112 sensiblement orientée dans la direction longitudinale X, s'étendant le long d'un bord du berceau moteur 12, ayant une première extrémité longitudinale et une deuxième extrémité longitudinale. La première branche 111 prend naissance depuis la deuxième branche 112 au niveau de la première extrémité longitudinale. Autrement dit, la zone de la première extrémité longitudinale de la deuxième branche 112 coïncide avec la zone de la deuxième extrémité latérale proximale de la première branche 111 de sorte que les deux branches 111, 112 sont raccordées entre elles pour former un bras de suspension 11 ayant globalement la forme d'un « L » dans un plan (X, Y). Le système de montage à rotule 13 est pour sa part disposé au niveau de la deuxième extrémité longitudinale de la deuxième branche 112. La première extrémité latérale distale de la première branche 111 porte pour sa part un support de roue, notamment de type porte-fusée (non représenté).

L'agencement comprend des éléments de fixation démontables 14 de la chape de liaison 10 sur le berceau moteur 11. Il s'agit notamment d'éléments 14 assurant une fixation par vissage, les rendant démontables par une action de dévissage des éléments 14. De tels éléments peuvent être constitués par de simples vis traversant une lumière 15 formée dans la chape de liaison 10. Ils permettent de rendre la chape de liaison avantageusement interchangeable, notamment après une utilisation de ses éléments fusibles qui seront décrits plus loin, en cas de choc appliqué à la roue.

L'agencement comprend aussi des éléments de fixation 16 du bras de suspension 11 à la chape de liaison 10. Les éléments de fixation 16 du bras de suspension 11 à la chape de liaison 10 comprennent notamment un organe 161 monté sur le bras de suspension 11, notamment un boulon comprenant une vis filetée et au moins un écrou vissé sur cette vis. La coopération de la vis et dudit au moins un écrou est telle que la chape 10 et le bras de suspension 11 sont localement enserrés et fixés par cet effet au niveau de l'organe 161.

Les éléments de fixation 16 assurent une liaison rotule entre la chape de liaison 10 et le bras de suspension 11 et la chape de liaison 10 est logée entre ladite liaison rotule et le berceau moteur 12.

De manière avantageuse, l'agencement comprend des premiers éléments fusibles configurés de sorte à autoriser un premier déplacement D1 relatif du bras de suspension 11 par rapport au berceau moteur 12 sur une première course uniquement en cas d'application, sur la roue et/ou sur le bras de suspension 11, d'un effort extérieur dont la composante latérale FY comptée suivant la direction latérale Y du véhicule est supérieure à un premier seuil prédéterminé pour lequel les premiers éléments fusibles sont dimensionnés, les premiers éléments fusibles comprenant au moins une partie de la chape de liaison 10.

La nature des premiers éléments fusibles différentie les premier et deuxième modes de réalisation, la nature de la chape de liaison 10 étant différente de l'un à l'autre. Ces différences seront précisées plus loin.

L'invention porte aussi sur un véhicule automobile, comprenant au moins un tel agencement. Notamment, deux agencements pourront être prévus respectivement sur les côtés droit et gauche du berceau moteur 12, qui est alors commun aux deux agencements. L'agencement droit met en oeuvre le bras de suspension droit, la roue droite, une chape de liaison droite. L'agencement gauche comprend le bras de suspension gauche, la roue gauche et la chape de liaison gauche. La chape de liaison droite est fixée de manière démontable via ses éléments 14 au bord latéral droit du berceau moteur. La chape de liaison gauche est fixée de manière démontable via ses éléments 14 au bord latéral gauche du berceau moteur.

Les premiers éléments fusibles sont très avantageux en admettant un mouvement relatif entre le bras de suspension 11 et le berceau moteur 12, uniquement en cas d'un effort latéral supérieur au premier seuil prédéterminé, et évitant toute détérioration du berceau moteur 12 et du bras de suspension 11. En cas de mise en oeuvre du premier déplacement D1 selon la première course, seule la chape de liaison 10 dont les premiers éléments fusibles ont préalablement été activés, est à remplacer et c'est l'un des avantages de prévoir des éléments de fixation démontables 14 de la chape de liaison 10 sur le berceau moteur 12 que de pouvoir inter changer la chape de liaison.

Les premiers éléments fusibles sont configurés de sorte à interdire le premier déplacement D1 relatif sur la première course si la composante latérale FY dudit effort extérieur est inférieure au premier seuil prédéterminé et ce quelle que soit la valeur de la composante longitudinale FX dudit effort extérieur comptée suivant la direction longitudinale X du véhicule. Autrement dit, la valeur de FX n'a aucune influence sur l'état ou le comportement des premiers éléments fusibles.

La chape de liaison 10 est configurée et implantée par rapport au berceau moteur 12 et au bras de suspension 11 d'une manière telle que le premier déplacement D1 relatif sur la première course se pratique suivant la direction latérale Y du véhicule et selon un premier sens dirigé de la roue vers le berceau moteur 12. Au cours de ce mouvement, le bras de suspension 11 peut pivoter dans son ensemble autour du système de montage à rotule 13, tout en conservant son intégrité.

Dans chacun des premier et deuxième modes de réalisation, la chape de liaison 10 présente une forme générale en « U », avec deux ailes 101 parallèles déformables (deuxième mode de réalisation) ou munie d'une glissière (premier mode de réalisation). Les deux ailes 101 s'étendent dans la direction latérale Y, notamment en étant incluses chacune dans un plan (X, Y). Elles prennent toutes deux naissances depuis une base 102 fixée au berceau moteur 12 via les éléments de fixation démontables 14. Chaque lumière 15 est formée dans la base 102. Les deux ailes permettent quant à elles la fixation de l'organe 161 à un emplacement à distance suivant Y par rapport à la base 102 et donc par rapport au berceau moteur 12. L'interposition de cette distance doit être supérieure à la première course envisagée pour le premier déplacement D1 relatif entre le bras de suspension 11 et le berceau moteur 12. Il reste toutefois que la forme de la chape de liaison 10 peut être quelconque.

Selon le premier mode de réalisation, les premiers éléments fusibles comprennent un premier élément de guidage 171 solidaire de la chape de liaison 10 configuré de sorte à guider un premier déplacement de l'organe 161 par rapport à la chape de liaison 10 selon une trajectoire et le long du premier élément de guidage 171 correspondant à la première course du premier déplacement relatif D1 et un premier élément de blocage 181 configuré pour se rompre uniquement si la composante latérale FY de l'effort extérieur est supérieure au premier seuil prédéterminé, le premier déplacement de l'organe 161 n'étant autorisé qu'en cas de rupture du premier élément de blocage 171.

Dans ce premier mode de réalisation, il y a donc la mise en oeuvre d'un glissement relatif entre la chape de liaison 10 et le bras de suspension 11, par glissement de l'organe 161 le long du premier élément de guidage 171. Les ailes 101 conservent leur forme et leur intégrité. Seul le premier élément de blocage 181 est dimensionné pour se rompre au moment où FY est supérieure au premier seuil. La valeur de la composante FX n'a aucune influence sur le comportement et l'état du premier élément de blocage 181.

Selon le deuxième mode de réalisation maintenant, les premiers éléments fusibles comprennent au moins une aile 101 de la chape 10 sur laquelle l'organe 161 est fixé et configurée de sorte à se déformer plastiquement uniquement si la composante latérale FY de l'effort extérieur est supérieure au premier seuil prédéterminé, la déformation plastique de l'aile 101 qui en résulte s'accompagnant d'un déplacement de l'organe 161 selon une trajectoire par rapport au berceau moteur 12 correspondant à la première course du premier déplacement relatif D1.

Dans le deuxième mode de réalisation, il y a donc la mise en oeuvre d'une déformation plastique d'au moins une aile 101 de la chape sur laquelle l'organe 161 est fixé. Dans le deuxième mode de réalisation illustré sur les figures 4 à 13, l'organe 161 est fixé sur les deux ailes 101 de la chape 10 et les deux ailes 101 de la chape 10 sont configurées de sorte à se déformer plastiquement lorsque FY est supérieure au premier seuil. La valeur de la composante FX n'a aucune influence sur le comportement et l'état en compression des deux ailes 101. Le second seuil d'effort FX peut être traité en utilisant une seconde chape de liaison au niveau du système 13. L'agencement comprend alors une deuxième chape de liaison montée entre le système de montage à rotule 13 et le berceau moteur 12, de même nature que la chape de liaison 10 en liaison avec les éléments de fixation 16 mais distincte de celle-ci. Des premiers et éventuels deuxièmes éléments fusibles sont également prévus entre cette deuxième chape de liaison et le système 13.

Les figures 6 à 13 varient entre elles au niveau de la conception des éléments de fixation démontables 14 et de la nature des ailes 101. Les figures 6, 8, 10 et 12 représentent la chape de liaison 10 avant la déformation plastique des ailes 101. Les figures 7, 9, 11 et 13 montrent ensuite la situation après la déformation plastique résultant de l'application d'une composante latérale FY ayant une valeur supérieure au premier seuil prédéterminé. En se déformant plastiquement sous l'effet de la composante FY, chaque aile 101 diminue sa longueur suivant la direction latérale Y 'une manière entraînant un déplacement de l'organe 161 selon Y en direction du berceau moteur 12 et correspondant au premier déplacement D1 relatif.

Sur les figures 6 et 7, le premier exemple du deuxième mode de réalisation prévoit des premiers éléments fusibles obtenus avec deux ailes 101 planes et parallèles, la base 102 de la chape de liaison 10 étant latéralement vissée suivant la direction latérale Y dans le berceau moteur 12.

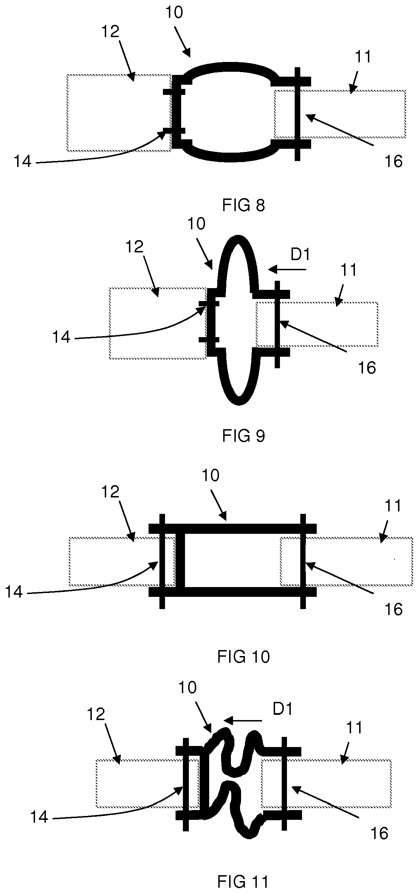

Sur les figures 8 et 9, le deuxième exemple du deuxième mode de réalisation prévoit des premiers éléments fusibles obtenus à l'aide de deux ailes 101 bombées sur leur longueur, de sorte à favoriser leur déformation plastique. La forme bombée peut être formée sur toute la longueur de l'aile 101 suivant la direction Y, ou seulement sur une partie comme cela est illustré sur les figures 4 et 5. Une telle forme bombée a pour effet de constituer une zone préférentielle de déformation plastique, évitant aux ailes 101 de se déformer ou de se rompre en dehors des zones bombées. La base 102 de la chape de liaison 10 est latéralement vissée suivant la direction latérale Y dans le berceau moteur 12.

Sur les figures 10 et 11, le troisième exemple du deuxième mode de réalisation prévoit des premiers éléments fusibles obtenus avec deux ailes 101 planes et parallèles, mais au contraire du premier exemple, la base 102 de la chape de liaison 10 est rapportée contre le berceau moteur 12 suivant la direction latérale Y mais en étant visée dans le berceau moteur suivant la direction verticale Z.

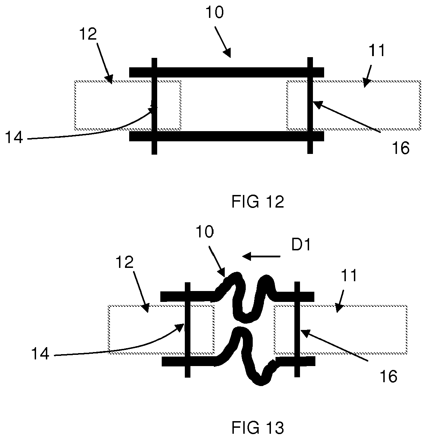

Le quatrième exemple du deuxième mode de réalisation en référence aux figures 12 et 13 est une variante du troisième exemple dans lequel la base 102 de la chape de liaison 10 est visée dans le berceau moteur 12 suivant la direction verticale Z mais n'est pas rapportée contre le berceau moteur 12 suivant la direction latérale Y.

Les avantages du deuxième mode de réalisation sont au moins les suivants :
- les chocs longitudinaux et latéraux sont totalement découplés grâce à la chape de liaison 10 fusible,
- l'effort de ruine (surtout en cas de choc latéral) est piloté par la tenue de la chape 10, donc facile à mettre au point, sans être perturbé par la tenue nécessaire en choc longitudinal (car la chape 10 travaille dans cet exemple en compression en choc latéral et en traction en choc longitudinal),
- absence de décapsulage de la rotule entre le bras de suspension 11 et le porte-fusée tant que le bras de suspension 11 et la palette rotule restent intègres,
- la chape de liaison 10 fusible est une tôle emboutie de petite taille, donc peu couteuse par rapport au bras 11 ou un berceau moteur 12,
- la fusibilité est assurée par une autre pièce que le bras 11 et le berceau moteur 12, ces pièces peuvent donc être fabriquées dans un matériau léger supportant mal les grandes déformations, tel que l'aluminium ou matériau composite.

En revenant maintenant au premier mode de réalisation, l'agencement comprend des deuxièmes éléments fusibles indépendants et dissociés des premiers éléments fusibles et configurés de sorte à autoriser un deuxième déplacement D2 relatif du bras de suspension 11 par rapport au berceau moteur 12 sur une deuxième course uniquement en cas d'application, sur la roue et/ou sur le bras de suspension 11, d'un effort extérieur dont la composante longitudinale FX comptée suivant la direction longitudinale X du véhicule est supérieure à un deuxième seuil prédéterminé pour lequel les deuxièmes éléments fusibles sont dimensionnés, les deuxièmes éléments fusibles comprenant au moins une partie de la chape de liaison 10.

Les deuxièmes éléments fusibles sont configurés de sorte à interdire le deuxième déplacement D2 relatif sur la deuxième course si la composante longitudinale FX de l'effort extérieur est inférieure au deuxième seuil prédéterminé et quelle que soit la valeur de la composante latérale FY de l'effort extérieur comptée suivant la direction latérale Y du véhicule. Autrement dit, la valeur de FY n'a aucune influence sur l'état ou le comportement des deuxièmes éléments fusibles.

Ainsi, la fusibilité conférée par les premiers éléments fusibles vis-à-vis de la composante latérale FY de l'effort extérieur est totalement découplée de la fusibilité conférée par les deuxièmes éléments fusibles vis-à-vis de la composante longitudinale FX de l'effort extérieur.

Avantageusement, la chape de liaison 10 est configurée et implantée par rapport au berceau moteur 12 et au bras de suspension 11 d'une manière telle que le deuxième déplacement D2 relatif selon la deuxième course se pratique suivant la direction latérale Y et selon un deuxième sens dirigé du berceau moteur 12 vers la roue. Au cours de ce mouvement, le bras de suspension 11 peut pivoter dans son ensemble autour du système de montage à rotule 13, tout en conservant son intégrité.

La dissociation de la fusibilité conférée par la chape 10 vis-à-vis de la composante latérale FY, qui se pratique par un déplacement D1 dans un premier sens, est totale par rapport à la fusibilité conférée par la chape 10 vis-à-vis de la composante longitudinale, qui se pratique par un déplacement D2 dans un deuxième sens. Etant dirigés dans des sens opposés, la dissociation de ces deux types de fusibilité est complète. Il est impossible que les premiers éléments fusibles puissent assurer une quelconque fusibilité vis-à-vis de la composante longitudinale FX de l'effort extérieur. De même, il est impossible que les deuxièmes éléments fusibles puissent assurer une quelconque fusibilité vis-à-vis de la composante latérale FY de l'effort extérieur.

Dans le premier mode de réalisation, les deuxièmes éléments fusibles comprennent un deuxième élément de guidage 172 solidaire de la chape de liaison 10 configuré de sorte à guider un deuxième déplacement de l'organe 161 par rapport à la chape de liaison 10 selon une trajectoire le long du deuxième élément de guidage 172 correspondant à la deuxième course du deuxième déplacement D2 relatif et un deuxième élément de blocage 182 configuré pour se rompre uniquement si la composante longitudinale FX de l'effort extérieur est supérieure au deuxième seuil prédéterminé, le deuxième déplacement de l'organe 161 n'étant autorisé qu'en cas de rupture du deuxième élément de blocage 182.

En référence à la figure 2, les premier et deuxième éléments de guidage 171, 172 comprennent une glissière dans laquelle pénètre au moins une partie de l'organe 161, les premier et deuxième éléments de blocage 181, 182 étant disposés, avant la rupture d'au moins l'un des premier et deuxième éléments de blocage 181, 182 en raison de l'application de l'effort extérieur, de part et d'autre de l'organe 161 suivant la direction de glissement G définie par la glissière. Avant cette rupture du premier élément de blocage 181 si FY est supérieure au premier seuil prédéterminé ou du deuxième élément de blocage 182 si FX est supérieure au deuxième seuil prédéterminé, l'organe 161 traverse l'aile 101 à travers une ouverture 19 délimitée de part et d'autre, suivant la direction de glissement G, par les premier et deuxième éléments de blocage 181, 182. Ainsi, chaque aile 101 comprend une telle glissière, destinée à être traversée par l'organe 161. Chaque aile comprend donc une ouverture 19, des premier et deuxième éléments de blocage 181, 182. Pour chaque aile 101, le premier élément de guidage 171 est formé par une première lumière ménagée dans l'aile 101 suivant la direction G du côté opposé à l'ouverture 19 par rapport au premier élément de blocage 181. Pour chaque aile 101, le deuxième élément de guidage 172 est formé par une lumière ménagée dans l'aile 101 suivant la direction G du côté opposé à l'ouverture 19 par rapport au deuxième élément de blocage 182. Les première et deuxième lumières sont orientées dans l'alignement l'une de l'autre de part et d'autre de l'ouverture 19.

Les avantages de ce premier mode de réalisation sont entre autre :
- les efforts de ruine sont totalement découplés en choc latéral et en choc longitudinal, et sont pilotés par la tenue des premier et deuxième éléments de blocage 181, 182 et le glissement de l'organe 161 vissé, donc facile à mettre au point.
- absence de décapsulage de la rotule entre le bras de suspension 11 et le porte-fusée tant que le bras de suspension 11 et la palette rotule restent intègres,
- la chape de liaison fusible peut notamment être obtenue par emboutissage d'une tôle de petite taille, donc peu couteuse par rapport au prix d'un bras de suspension 11 ou d'un berceau moteur 12.

Une fois le premier élément de blocage 181 ou le deuxième élément de blocage 182 endommagé, en fonction de la nature du choc subi par la roue, c'est-à-dire en fonction de la valeur de la valeur de sa composante latérale FY et de sa composante longitudinale FX, l'organe 161 peut glisser dans la glissière formée dans chaque aile 101 de la chape de liaison 10 et ainsi modifier suffisamment la topologie du train roulant pour alerter le conducteur.

Les avantages sont de fournir un agencement pour véhicule automobile qui permette :
- de fournir une fusibilité latérale découplée d'une fusibilité longitudinale,
- de proposer une solution moins onéreuse, avec une pièce fusible distincte du bras de suspension et du berceau moteur, lors des réparations après un choc,
- d'éviter le phénomène de décapsulage du montage à rotule du bras de suspension sur le porte-fusée en cas de choc subi par la roue.

## Revendications

1. Agencement pour véhicule automobile, comprenant un bras de suspension (11), un berceau moteur (12), une roue fixée au bras de suspension et au moins une chape intermédiaire de liaison (10) disposée entre le bras de suspension (11) et le berceau moteur (12) pour assurer tout ou partie de la fixation du bras de suspension (11) sur le berceau moteur (12), **caractérisé par** des éléments de fixation démontables (14) de la chape de liaison (10) sur le berceau moteur (12), des éléments de fixation (16) du bras de suspension (11) à la chape de liaison (10), des premiers éléments fusibles configurés de sorte à autoriser un premier déplacement (D1) relatif du bras de suspension (11) par rapport au berceau moteur (12) sur une première course uniquement en cas d'application, sur la roue et/ou sur le bras de suspension (11), d'un effort extérieur dont la composante latérale (FY) comptée suivant une direction latérale (Y) du véhicule est supérieure à un premier seuil prédéterminé pour lequel les premiers éléments fusibles sont dimensionnés, les premiers éléments fusibles comprenant au moins une partie de la chape de liaison (10).

2. Agencement selon la revendication 1, **caractérisé en ce que** les premiers éléments fusibles sont configurés de sorte à interdire le premier déplacement (D1) relatif sur la première course si la composante latérale (FY) dudit effort extérieur est inférieure au premier seuil prédéterminé et quelle que soit la valeur de la composante longitudinale (FX) dudit effort extérieur comptée suivant une direction longitudinale (X) du véhicule.

3. Agencement selon l'une des revendications 1 ou 2, **caractérisé en ce que** la chape de liaison (10) est configurée et implantée par rapport au berceau moteur (12) et au bras de suspension (11) d'une manière telle que le premier déplacement (D1) relatif sur la première course se pratique suivant la direction latérale (Y) du véhicule et selon un premier sens dirigé de la roue vers le berceau moteur (12).

4. Agencement selon l'une des revendications 1 à 3, **caractérisé en ce que** les éléments de fixation (16) du bras de suspension (11) à la chape de liaison (10) comprennent un organe (161) monté sur le bras de suspension (11), notamment un boulon, et **en ce que** les premiers éléments fusibles comprennent un premier élément de guidage (171) solidaire de la chape de liaison (10) configuré de sorte à guider un premier déplacement de l'organe (161) par rapport à la chape de liaison (10) selon une trajectoire et le long du premier élément de guidage (171) correspondant à ladite première course et un premier élément de blocage (181) configuré pour se rompre uniquement si la composante latérale (FY) de l'effort extérieur est supérieure au premier seuil prédéterminé, le premier déplacement de l'organe (161) n'étant autorisé qu'en cas de rupture du premier élément de blocage (181).

5. Agencement selon l'une des revendications 1 à 3, **caractérisé en ce que** les éléments de fixation (16) du bras de suspension (11) à la chape de liaison (10) comprennent un organe (161) monté sur le bras de suspension (11), notamment un boulon, et **en ce que** les premiers éléments fusibles comprennent au moins une aile (101) sur laquelle l'organe (161) est fixé et configurée de sorte à se déformer plastiquement uniquement si la composante latérale (FY) de l'effort extérieur est supérieure au premier seuil prédéterminé, la déformation plastique de l'aile (101) qui en résulte s'accompagnant d'un déplacement de l'organe (161) selon une trajectoire par rapport au berceau moteur (12) correspondant à ladite première course.

6. Agencement selon l'une des revendications 1 à 5, **caractérisé en ce qu'**il comprend des deuxièmes éléments fusibles indépendants et dissociés des premiers éléments fusibles et configurés de sorte à autoriser un deuxième déplacement (D2) relatif du bras de suspension (11) par rapport au berceau moteur (12) sur une deuxième course uniquement en cas d'application, sur la roue et/ou sur le bras de suspension (11), d'un effort extérieur dont la composante longitudinale (FX) comptée suivant la direction longitudinale (X) du véhicule est supérieure à un deuxième seuil prédéterminé pour lequel les deuxièmes éléments fusibles sont dimensionnés, les deuxièmes éléments fusibles comprenant au moins une partie de la chape de liaison (10).

7. Agencement selon la revendication 6, **caractérisé en ce que** les deuxièmes éléments fusibles sont configurés de sorte à interdire le deuxième déplacement (D2) relatif sur la deuxième course si la composante longitudinale (FX) de l'effort extérieur est inférieure au deuxième seuil prédéterminé et quelle que soit la valeur de la composante latérale (FY) de l'effort extérieur comptée suivant la direction latérale (Y) du véhicule.

8. Agencement selon l'une des revendications 6 ou 7, **caractérisé en ce que** la chape de liaison (10) est configurée et implantée par rapport au berceau moteur (12) et au bras de suspension (11) d'une manière telle que le deuxième déplacement (D2) relatif selon la deuxième course se pratique suivant la direction latérale (Y) et selon un deuxième sens dirigé du berceau moteur (12) vers la roue.

9. Agencement selon l'une des revendications 6 à 8, **caractérisé en ce que** les éléments de fixation (16) du bras de suspension (11) à la chape de liaison (10) comprennent un organe (161) monté sur le bras de suspension (11), notamment un boulon, et **en ce que** les deuxièmes éléments fusibles comprennent un deuxième élément de guidage (172) solidaire de la chape de liaison (10) configuré de sorte à guider un deuxième déplacement de l'organe (161) par rapport à la chape de liaison (10) selon une trajectoire le long du deuxième élément de guidage (172) correspondant à ladite deuxième course et un deuxième élément de blocage (182) configuré pour se rompre uniquement si la composante longitudinale (FX) dudit effort extérieur est supérieure au deuxième seuil prédéterminé, le deuxième déplacement de l'organe n'étant autorisé qu'en cas de rupture du deuxième élément de blocage (182).

10. Agencement selon les revendications 4 et 9, **caractérisé en ce que** les premier et deuxième éléments de guidage (171, 172) comprennent une glissière dans laquelle pénètre au moins une partie dudit organe (161), les premier et deuxième éléments de blocage (181, 182) étant disposés, avant la rupture d'au moins l'un des premier et deuxième éléments de blocage (181, 182) en raison de l'application de l'effort extérieur, de part et d'autre dudit organe (161) suivant la direction de glissement (G) définie par la glissière.

11. Agencement selon l'une des revendications 1 à 10, **caractérisé en ce que** la fixation du bras de suspension (11) au berceau moteur (12) comprend un système de montage à rotule (13) distinct de la chape de liaison (10), le point de fixation conféré par la chape de liaison (10) et le point de fixation conféré par ce système de montage à rotule (13) étant décalés entre eux suivant la direction longitudinale (X) du véhicule.

12. Agencement selon la revendication 11, **caractérisé en ce qu'**il comprend une deuxième chape de liaison montée entre le système de montage à rotule (13) et le berceau moteur (12), de même nature que la chape de liaison (10) en liaison avec les éléments de fixation (16) mais distincte de celle-ci.

13. Agencement selon l'une des revendications 1 à 12, **caractérisé en ce que** les éléments de fixation (16) assurent une liaison rotule entre la chape de liaison (10) et le bras de suspension (11) et la chape de liaison (10) est logée entre ladite liaison rotule et le berceau moteur (12).

14. Véhicule automobile, comprenant au moins un agencement selon l'une quelconque des revendications précédentes.

## Patentansprüche

1. Anordnung für Kraftfahrzeug, die einen Lenkerarm (11), eine Motorwiege (12), ein an dem Lenkerarm befestigtes Rad und wenigstens ein Verbindungszwischengelenk (10), das zwischen dem Lenkerarm (11) und der Motorwiege (12) angeordnet ist, um die Befestigung des Lenkerarms (11) an der Motorwiege (12) ganz oder teilweise sicherzustellen, umfasst, **gekennzeichnet durch**
demontierbare Elemente (14) für die Befestigung des Verbindungsgelenks (10) an der Motorwiege (12), Elemente (16) für die Befestigung des Lenkarms (11) an dem Verbindungsgelenk (10), erste schmelzbare Elemente, die in der Weise konfiguriert sind, dass eine erste relative Verlagerung (D1) des Lenkerarms (11) in Bezug auf die Motorwiege (12) auf einer ersten Bahn ausschließlich bei Ausübung einer äußeren Kraft auf das Rad und/oder auf den Lenkerarm (11), deren transversale Komponente (FY) gerechnet in einer transversalen Richtung (Y) des Fahrzeugs größer ist als ein erster vorgegebener Schwellenwert, für den die ersten schmelzbaren Elemente bemessen sind, wobei die ersten schmelzbaren Elemente wenigstens einen Teil des Verbindungsgelenks (10) umfassen.

2. Anordnung nach Anspruch 1, **dadurch gekennzeichnet, dass** die ersten schmelzbaren Elemente in der Weise konfiguriert sind, dass die erste relative Verlagerung (D1) auf der ersten Bahn verhindert wird, wenn die transversale Komponente (FY) der äußeren Kraft kleiner als der erste vorgegebene Schwellenwert ist und kleiner als der Wert der longitudinalen Komponente (FX) der äußeren Kraft gerechnet in Längsrichtung (X) des Fahrzeugs ist.

3. Anordnung nach einem der Ansprüche 1 oder 2, **dadurch gekennzeichnet, dass** das Verbindungsgelenk (10) in Bezug auf die Motorwiege (12) und den Lenkerarm (11) in der Weise konfiguriert und verbaut ist, dass die erste relative Verlagerung (D1) auf der ersten Bahn in der transversalen Richtung (Y) des Fahrzeugs und in einem ersten Richtungssinn vom Rad zu der Motorwiege (12) erfolgt.

4. Anordnung nach einem der Ansprüche 1 bis 3, **dadurch gekennzeichnet, dass** die Elemente (16) für die Befestigung des Lenkerarms (11) an dem Verbindungsgelenk (10) ein an dem Lenkerarm (11) montiertes Organ (161), insbesondere einen Bolzen, umfassen und dass die ersten schmelzbaren Elemente ein erstes Führungselement (171), das mit dem Verbindungsgelenk (10) fest verbunden ist und in der Weise konfiguriert ist, dass es eine erste Verlagerung des Organs (161) in Bezug auf das Verbindungsgelenk (10) auf einem ersten Weg und entlang des ersten Führungselements (171), was der ersten Bahn entspricht, führt, und ein zweites Blockierelement (181), das konfiguriert ist, ausschließlich dann zu zerbrechen, wenn die transversale Komponente (FY) der äußeren Kraft größer als der erste vorgegebene Schwellenwert ist, umfassen, wobei die erste Verlagerung des Organs (161) nur im Fall eines Bruchs des ersten Blockierelements (181) zugelassen wird.

5. Anordnung nach einem der Ansprüche 1 bis 3, **dadurch gekennzeichnet, dass** die Elemente (16) für die Befestigung des Lenkerarms (11) an dem Verbindungsgelenk (10) ein an dem Lenkerarm (11) montiertes Organ (161), insbesondere einen Bolzen, umfassen und dass die ersten schmelzbaren Elemente wenigstens einen Flügel (101) umfassen, an dem das Organ (161) befestigt ist und der in der Weise konfiguriert ist, dass er sich ausschließlich dann plastisch verformt, wenn die transversale Komponente (FY) der äußeren Kraft größer als der erste vorgegebene Schwellenwert ist, wobei die plastische Verformung des Flügels (101), die sich daraus ergibt, von einer Verlagerung des Organs (161) auf einem Weg in Bezug auf die Motorwiege (12), der der ersten Bahn entspricht, begleitet wird.

6. Anordnung nach einem der Ansprüche 1 bis 5, **dadurch gekennzeichnet, dass** sie zweite, unabhängige schmelzbare Elemente umfasst, die von den ersten schmelzbaren Elementen getrennt sind und in der Weise konfiguriert sind, dass sie eine zweite relative Verlagerung (D2) des Lenkerarms (11) in Bezug auf die Motorwiege (12) auf einem zweiten Weg ausschließlich bei Ausübung einer äußeren Kraft auf das Rad und/oder auf den Lenkerarm (11), deren longitudinale Komponente (FX) gerechnet in der Längsrichtung (X) des Fahrzeugs größer als ein zweiter vorgegebener Schwellenwert ist, für den die zweiten schmelzbaren Elemente bemessen sind, zulassen, wobei die zweiten schmelzbaren Elemente wenigstens einen Teil des Verbindungsgelenks (10) umfassen.

7. Anordnung nach Anspruch 6, **dadurch gekennzeichnet, dass** die zweiten schmelzbaren Elemente in der Weise konfiguriert sind, dass die zweite relative Verlagerung (D2) auf der zweiten Bahn verhindert wird, wenn die longitudinale Komponente (FX) der äußeren Kraft kleiner als der zweite vorgegebene Schwellenwert und als der Wert der transversalen Komponente (FY) der äußeren Kraft gerechnet in der transversalen Richtung (Y) des Fahrzeugs ist.

8. Anordnung nach einem der Ansprüche 6 oder 7, **dadurch gekennzeichnet, dass** das Verbindungsgelenk (10) in Bezug auf die Motorwiege (12) und den Lenkerarm (11) in der Weise konfiguriert und verbaut ist, dass die zweite relative Verlagerung (D2) längs der zweiten Bahn in der transversalen Richtung (Y) und in einem zweiten Richtungssinn von der Motorwiege (12) zum Rad erfolgt.

9. Anordnung nach einem der Ansprüche 6 bis 8, **dadurch gekennzeichnet, dass** die Elemente (16) für die Befestigung des Lenkerarms (11) an dem Verbindungsgelenk (10) ein an dem Lenkerarm (11) montiertes Organ (161), insbesondere einen Bolzen, umfassen und dass die zweiten schmelzbaren Elemente ein zweites Führungselement (172), das mit dem Verbindungsgelenk (10) fest verbunden ist und in der Weise konfiguriert ist, dass es eine zweite Verlagerung des Organs (161) in Bezug auf das Verbindungsgelenk (10) auf einem Weg längs des zweiten Führungselements (172), der der zweiten Bahn entspricht, führt, und ein zweites Blockierelement (182), das konfiguriert ist, ausschließlich dann zu zerbrechen, wenn die longitudinale Komponente (FX) der äußeren Kraft größer als der zweite vorgegebene Schwellenwert ist, umfassen, wobei die zweite Verlagerung des Organs nur im Fall eines Bruchs des zweiten Blockierelements (182) zugelassen wird.

10. Anordnung nach den Ansprüchen 4 und 9, **dadurch gekennzeichnet, dass** das erste und das zweite Führungselement (171, 172) eine Gleitschiene umfassen, in die wenigstens ein Teil des Organs (161) eindringt, wobei das erste und das zweite Blockierelement (181, 182) vor dem Bruch wenigstens eines des ersten und des zweiten Blockierelements (181, 182) aufgrund der Ausübung der äußeren Kraft beiderseits des Organs (161) in der durch die Gleitschiene definierten Gleitrichtung (G) angeordnet sind.

11. Anordnung nach einem der Ansprüche 1 bis 10, **dadurch gekennzeichnet, dass** die Befestigung des Lenkerarms (11) an der Motorwiege (12) ein Kugelgelenkmontagesystem (13) umfasst, das von dem Verbindungsgelenk (10) verschieden ist, wobei der durch das Verbindungsgelenk (10) geschaffene Befestigungspunkt und der durch dieses Kugelgelenkmontagesystem (13) geschaffene Befestigungspunkt in der Längsrichtung (X) des Fahrzeugs zueinander versetzt sind.

12. Anordnung nach Anspruch 11, **dadurch gekennzeichnet, dass** sie ein zweites Verbindungsgelenk umfasst, das zwischen dem Kugelgelenkmontagesystem (13) und der Motorwiege (12) montiert ist und von der gleichen Art wie das Verbindungsgelenk (10) in Verbindung mit den Befestigungselementen (16), jedoch hiervon getrennt ist.

13. Anordnung nach einem der Ansprüche 1 bis 12, **dadurch gekennzeichnet, dass** die Befestigungselemente (16) eine Kugelgelenkverbindung zwischen dem Verbindungselement (10) und dem Lenkerarm (11) sicherstellen und der Lenkerarm (10) zwischen der Kugelgelenkverbindung und der Motorwiege (12) aufgenommen ist.

14. Kraftfahrzeug, das wenigstens eine Anordnung nach einem der vorhergehenden Ansprüche umfasst.

## Claims

1. Arrangement for a motor vehicle comprising a suspension arm (11), an engine cradle (12), a wheel attached to the suspension arm and at least one intermediate linking fork joint (10) disposed between the suspension arm (11) and the engine cradle (12) to ensure the complete or partial attachment of the suspension arm (11) to the engine cradle (12), **characterized by** removable elements (14) for attaching the linking fork joint (10) to the engine cradle (12), elements (16) for attaching the suspension arm (11) to the linking fork joint (10), first fusible elements configured in such a manner as to allow a first relative displacement (D1) of the suspension arm (11) with respect to the engine cradle (12) over a first path only in the event of application, to the wheel and/or to the suspension arm (11), of an external force, the lateral component (FY) of which, measured in a lateral direction (Y) of the vehicle, exceeds a first predetermined threshold for which the first fusible elements are sized, the first fusible elements comprising at least one portion of the linking fork joint (10).

2. Arrangement according to Claim 1, **characterized in that** the first fusible elements are configured in such a manner as to prevent the first relative displacement (D1) over the first path if the lateral component (FY) of said external force is below the first predetermined threshold and whatever the value of the longitudinal component (FX) of said external force measured in a longitudinal direction (X) of the vehicle.

3. Arrangement according to either of Claims 1 and 2, **characterized in that** the linking fork joint (10) is configured and inserted in relation to the engine cradle (12) and the suspension arm (11) in such a manner that the first relative displacement (D1) over the first path is carried out in the lateral direction (Y) of the vehicle and in a first direction from the wheel towards the engine cradle (12).

4. Arrangement according to one of Claims 1 to 3, **characterized in that** the elements (16) for attaching the suspension arm (11) to the linking fork joint (10) comprise a unit (161) mounted on the suspension arm (11), particularly a nut and bolt, and **in that** the first fusible elements comprise a first guide element (171) integral with the linking fork joint (10) configured so as to guide a first displacement of the unit (161) with respect to the linking fork joint (10) along a trajectory and along the first guide element (171) corresponding to said first path and a first locking element (181) configured to break only if the lateral component (FY) of the external force exceeds the first predetermined threshold, the first displacement of the unit (161) only being allowed in the event of breakage of the first locking element (181).

5. Arrangement according to one of Claims 1 to 3, **characterized in that** the elements (16) for attaching the suspension arm (11) to the linking fork joint (10) comprise a unit (161) mounted on the suspension arm (11), particularly a nut and bolt, and **in that** the first fusible elements comprise at least one wing (101) to which the unit (161) is attached and configured so as to be plastically deformed only if the lateral component (FY) of the external force exceeds the first predetermined threshold, the plastic deformation of the wing (101) that results from this accompanying a displacement of the unit (161) along a trajectory in relation to the engine cradle (12) corresponding to said first path.

6. Arrangement according to one of Claims 1 to 5, **characterized in that** it comprises second fusible elements independent of and disassociated from the first fusible elements and configured to allow a second relative displacement (D2) of the suspension arm (11) in relation to the engine cradle (12) over a second path only in the event of application, to the wheel and/or to the suspension arm (11), of an external force, the longitudinal component (FX) of which, measured in the longitudinal direction (X) of the vehicle, exceeds a second predetermined threshold for which the second fusible elements are sized, the second fusible elements comprising at least a portion of the linking fork joint (10) .

7. Arrangement according to Claim 6, **characterized in that** the second fusible elements are configured to prevent the second relative displacement (D2) over the second path if the longitudinal component (FX) of the external force is below the second predetermined threshold and whatever the value of the lateral component (FY) of the external force measured in the lateral direction (Y) of the vehicle.

8. Arrangement according to either of Claims 6 and 7, **characterized in that** the linking fork joint (10) is configured and inserted with respect to the engine cradle (12) and the suspension arm (11) in such a manner that the second relative displacement (D2) over the second path is performed in the lateral direction (Y) and in a second direction from the engine cradle (12) towards the wheel.

9. Arrangement according to one of Claims 6 to 8, **characterized in that** the elements (16) for attaching the suspension arm (11) to the linking fork joint (10) comprise a unit (161) mounted on the suspension arm (11), in particular a nut and bolt, and **in that** the second fusible elements comprise a second guide element (172) integral with the linking fork joint (10) configured to guide a second displacement of the unit (161) with respect to the linking fork joint (10) along a trajectory along the second guide element (172) corresponding to said second path and a second locking element (182) configured to break only if the longitudinal component (FX) of said external force exceeds the second predetermined threshold, the second displacement of the unit only being allowed in the event of a breakage of the second locking element (182).

10. Arrangement according to Claims 4 and 9, **characterized in that** the first and second guide elements (171, 172) comprise a guide rail penetrated by at least a portion of said unit (161), the first and second locking elements (181, 182) being disposed, prior to the breakage of at least one of the first and second locking elements (181, 182), due to the application of the external force, on either side of said unit (161) in the sliding direction (G) defined by the guide rail.

11. Arrangement according to one of Claims 1 to 10, **characterized in that** the attachment of the suspension arm (11) to the engine cradle (12) comprises a ball-joint mounting system (13) different from the linking fork joint (10), the attachment point conferred by the linking fork joint (10) and the attachment point conferred by this ball-joint mounting system (13) being offset with respect to one another in the longitudinal direction (X) of the vehicle.

12. Arrangement according to Claim 11, **characterized in that** it comprises a second linking fork joint mounted between the ball-joint mounting system (13) and the engine cradle (12), of the same kind as the linking fork joint (10) linked to the attachment elements (16) but different therefrom.

13. Arrangement according to one of Claims 1 to 12, **characterized in that** the attachment elements (16) ensure a ball-joint link between the linking fork joint (10) and the suspension arm (11) and the linking fork joint (10) is housed between said ball-joint link and the engine cradle (12).

14. Motor vehicle comprising at least one arrangement according to any one of the preceding claims.
